# FASCICULE DE BREVET EUROPEEN

(11) **EP 2 382 065 B1**
(45) Date de publication et mention de la délivrance du brevet: **21.11.2012**
(21) Numéro de dépôt: 09805764.9
(22) Date de dépôt: 21.12.2009
(51) Int. Cl.: B22F 5/00, B29D 30/06, B22F 3/105, B29C 33/38, B29D 30/00

(54) **PROCEDE DE FABRICATION D'UN ELEMENT DE GARNITURE ET D'UN ELEMENT DE SOUTIEN DESTINES A UN MOULE DE PNEUMATIQUE**
VERFAHREN ZUR HERSTELLUNG EINES ABDECKELEMENTS UND STÜTZELEMENTS, DIE FÜR EINE REIFENFORM BESTIMMT SIND
METHOD OF MANUFACTURING A COVER ELEMENT AND A SUPPORT ELEMENT WHICH ARE INTENDED FOR A TYRE MOULD

(30) Priorité: 24.12.2008 FR 0859070
(43) Date de publication de la demande: 02.11.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LAUWERS, Olivier, F-63270 Yronde et Buron (FR); WASZKIEWICZ, Arkadiusz, PL-10-691 Olsztyn (FR)
(74) Mandataire: Lasson, Cédric Y. M.
(86) Numéro de dépôt international: PCT/FR2009/052638
(87) Numéro de publication internationale: WO 2010/072960

(56) Documents cités:
- EP-A- 0 523 958
- EP-A- 0 868 955
- EP-A- 1 277 554
- EP-A- 1 541 323
- EP-A- 1 719 598

## Description

L'invention concerne le domaine des moules de vulcanisation de pneumatiques, notamment des moules de type à secteurs.

Un moule à secteurs comprend plusieurs pièces séparées qui, par rapprochement relatif, délimitent un espace de moulage quasi-toroïdal. En particulier, un moule à secteurs comporte deux coquilles latérales pour le moulage des flancs du pneumatique, et plusieurs secteurs périphériques situés entre les coquilles pour le moulage de la bande de roulement du pneumatique. Le rapprochement de toutes ces pièces est assuré à l'aide d'une cinématique appropriée par un mécanisme voulu. L'ébauche crue du futur pneumatique doit être fermement appliquée et maintenue contre le moule pour obtenir des dimensions géométriques et une architecture précise, et pour imprimer la sculpture de la bande de roulement.

Pour former les sculptures de la bande de roulement, les secteurs du moule comprennent des éléments en saillie de la surface radialement intérieure des secteurs, ces éléments formant un négatif des sculptures à mouler sur la bande de roulement du pneumatique.

Pour qu'un même moule puisse être utilisé pour fabriquer des pneumatiques comprenant des formes de sculptures différentes, il est connu, par exemple du document EP 0 523 958, qu'un secteur du moule soit réalisé en plusieurs éléments : d'une part un bloc support ayant une forme générique définissant la courbure générale de la bande de roulement du pneumatique, et d'autre part une pluralité d'éléments de garniture rapportés sur le bloc support et destinés à former les sculptures de la bande de roulement du pneumatique.

L'élément de garniture décrit dans ce document est obtenu par moulage, par exemple par moulage d'acier. Ainsi, il s'agit d'un élément massif, lourd et coûteux à fabriquer.

L'invention a notamment pour but de proposer un procédé de fabrication d'un élément de garniture plus économique et plus simple à mettre en oeuvre.

A cet effet, l'invention a pour objet un procédé de fabrication d'un élément de garniture destiné à être rapporté sur un bloc support d'un moule pour pneumatique, comprenant les étapes suivantes :
- fabrication, par fusion sélective de couches superposées de poudre, d'un élément intermédiaire comprenant l'élément de garniture et au moins un élément de soutien local de l'élément de garniture, l'élément de garniture et l'élément de soutien local étant réalisés d'un seul tenant,
- séparation de l'élément de garniture et de l'élément de soutien.

L'élément de garniture est réalisé par fusion sélective de couches superposées de poudre. Lorsque la fusion sélective est réalisée par laser, on parle plus communément de frittage par laser ou frittage laser. L'intérêt de cette technique de fabrication de pièces est que la forme de la pièce peut être modélisée par ordinateur et la pièce peut être facilement fabriquée par frittage sur la base de cette modélisation. En effet, le laser peut être piloté par un ordinateur comprenant une modélisation de la pièce et l'on peut alors fabriquer la pièce par frittage successif de couches de poudre superposées. Dans le cas de la fabrication d'une garniture de moule, cette technique est particulièrement bien adaptée car elle permet de fabriquer des éléments de garniture de petites dimensions tels que des lamelles ou des cordons.

Toutefois, étant donné que l'élément de garniture est destiné à être rapporté sur un bloc support d'un moule pour pneumatique, dont la courbure est sensiblement identique à celle du pneumatique, il est nécessaire que l'élément de garniture comprenne une surface de base présentant une courbure complémentaire de celle du bloc support. En d'autres termes, la surface de base de l'élément de garniture n'est pas plane mais courbe.

Or, la technique de frittage laser impose de fabriquer l'élément de garniture couche après couche, en superposant des couches de poudre fusionnée les unes sur les autres. Un moyen de compactage permet de conférer la densité voulue à chaque couche de poudre. Les couches de poudre fusionnée sont de ce fait des couches planes.

Pour réaliser un élément de garniture dont la surface de base est courbe et non plane, il est donc nécessaire dans certains cas que les couches supérieures s'étendent sur un espace plus grand que celui défini par les couches inférieures ce qui implique que certaines couches se trouvent en porte-à-faux, sans soutien inférieur, en particulier lors de l'action du moyen de compactage. Il existe alors un risque que la solidarisation des couches les unes aux autres soit de mauvaise qualité et que l'élément de garniture ainsi obtenu soit défectueux.

Le procédé de l'invention permet de s'affranchir de ce problème grâce à l'utilisation d'au moins un élément de soutien local de l'élément de garniture pour former un élément intermédiaire. Cet élément de soutien est destiné à être séparé de l'élément de garniture après l'étape de frittage laser.

L'élément de soutien est agencé pour soutenir les parties de l'élément de garniture qui risquent de se trouver en porte-à-faux lors de la fabrication par frittage laser.

L'élément de garniture ainsi obtenu est de très bonne qualité et peut présenter la forme voulue, complémentaire de celle du bloc support.

Un procédé selon l'invention peut en outre comprendre l'une ou plusieurs des caractéristiques suivantes.
- L'élément de soutien est agencé de manière à soutenir l'élément de garniture selon une direction sensiblement parallèle à la direction de superposition des couches de poudre fusionnée. Comme indiqué précédemment, les couches de poudre fusionnée sont superposées les unes sur les autres selon une direction de superposition. Généralement, les couches sont sensiblement horizontales de sorte que la direction de superposition est sensiblement verticale. Par conséquent, si des parties de l'élément de garniture sont en porte-à-faux, les efforts imposés par la gravité ou par l'action mécanique du moyen de compactage sur les parties en porte-à-faux sont sensiblement verticaux, donc parallèles à la direction de superposition. Il est donc avantageux que l'élément de soutien soit agencé de manière à soutenir l'élément de garniture selon une direction sensiblement parallèle à la direction de superposition des couches de poudre fusionnée.
- Avant séparation, l'élément de soutien local comprend une extrémité en contact avec l'élément de garniture et une extrémité opposée appartenant à une couche de base des couches de poudre fusionnée. On parle de couche de base des couches de poudre fusionnée pour désigner la première couche de poudre fusionnée, c'est-à-dire la couche inférieure sur laquelle repose l'ensemble de l'élément intermédiaire fritté. Pour que les efforts dus au porte-à-faux soient repris par cette couche de base, il est donc préférable que l'élément de soutien relie l'élément de garniture à la couche de base.
- L'élément intermédiaire comprend une surface de base sensiblement plane. La surface de base étant définie par la première couche de poudre fusionnée, celle-ci est sensiblement plane.
- Chaque couche de poudre fusionnée est située sensiblement intégralement au droit de la couche fusionnée directement inférieure. En d'autres termes, la projection d'une couche fusionnée sur la couche directement inférieure, le long de la direction de superposition, est incluse dans la couche inférieure. Ainsi, on a l'assurance qu'aucune couche de l'élément intermédiaire n'est en porte-à-faux puisque chaque couche est intégralement soutenue par la couche inférieure.
- L'élément intermédiaire comprend des moyens pour faciliter la séparation de l'élément de garniture et de l'élément de soutien. Comme le procédé comprend une étape de séparation de l'élément de garniture et de l'élément de soutien, il est préférable de prévoir des moyens pour faciliter cette séparation.
- Les moyens pour faciliter la séparation comprennent une diminution locale d'épaisseur de l'élément intermédiaire, une cloison fine par rapport à l'épaisseur de l'élément intermédiaire, ou une pré-découpé de l'élément intermédiaire.
- L'élément de garniture comprend un réseau de nervures, chaque nervure étant sensiblement normale aux plans définis par les couches superposées. Les nervures de l'élément de garniture sont destinées à former des rainures dans la bande de roulement du pneumatique.
- Le procédé comprend en outre une étape finale de polissage de la surface de l'élément de garniture initialement liée à l'élément de soutien.

L'invention a également pour objet un élément intermédiaire obtenu par mise en oeuvre du procédé tel que précédemment défini.

L'invention sera mieux comprise à la lecture de la description qui va suivre, donnée uniquement à titre d'exemple et faite en se référant aux dessins annexés dans lesquels :
- La figure 1, est une vue en perspective d'un segment d'un moule pour pneumatique, comprenant un bloc support et un ensemble d'éléments de garniture obtenus par mise en oeuvre du procédé de l'invention,
- la figure 2 est une vue détaillée d'un élément de garniture représenté sur la figure 1,
- la figure 3 est une vue en perspective d'un élément intermédiaire selon l'invention, comprenant l'élément de garniture de la figure 2,
- la figure 4 est une vue de détail de l'élément de la figure 3,
- la figure 5 est une vue de détail de l'élément de la figure 4,

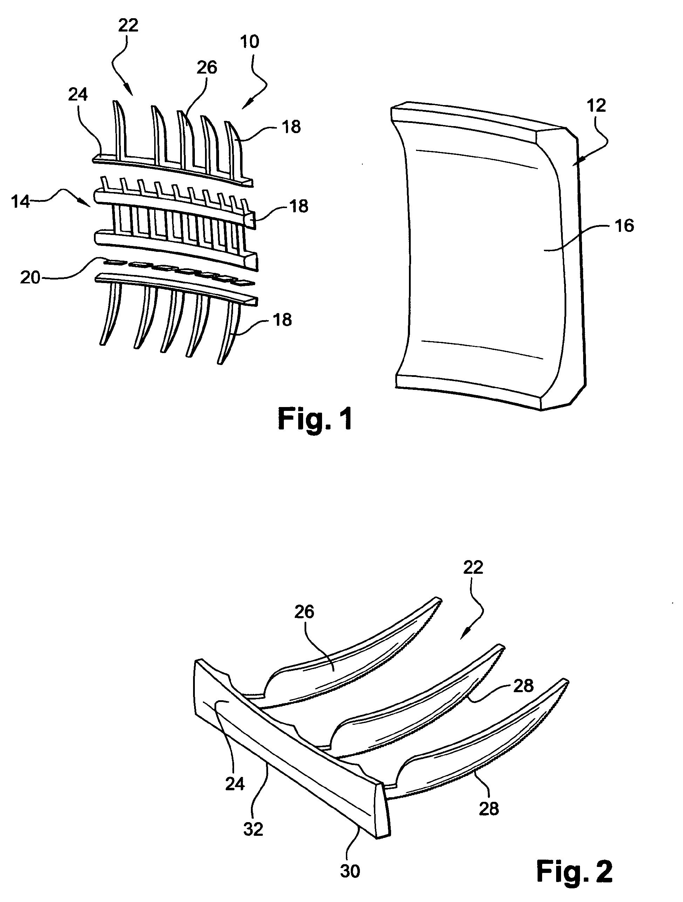

On a représenté sur la figure 1 un secteur, désigné par la référence générale 10, d'un moule de vulcanisation (non-représenté) pour pneumatique, à un stade préliminaire de sa fabrication.

Un moule à secteurs pour la vulcanisation d'un pneumatique comprend une pluralité de secteurs identiques ou semblables à celui représenté sur la figure 1. Les secteurs sont disposés les uns à côté des autres de manière circonférentielle, et définissent ainsi un cylindre pour le moulage de la bande de roulement du pneumatique.

Un secteur 10 donné est donc destiné à former une partie de la bande de roulement du pneumatique.

Le secteur 10 comprend un bloc support 12 et un ensemble 14 de garniture rapporté sur le bloc support 12.

Le bloc support 12, réalisé par exemple en acier massif, comprend notamment une surface radialement intérieure 16 formant support pour l'ensemble 14 de garniture. La surface 16 est sensiblement lisse et sa forme générale est sensiblement identique à celle de la partie de la bande de roulement du pneumatique qui est en regard de ce bloc support lors du moulage. En d'autres termes, la surface 16 présente des courbures dans un plan radial comprenant l'axe du pneumatique et dans un plan radial normal à l'axe du pneumatique, sensiblement identiques à celles du pneumatique.

L'ensemble 14 de garniture comprend une pluralité d'éléments 18 de garniture destinés à former des sculptures de la partie de la bande de roulement du pneumatique, en regard du secteur 10.

Différents types d'éléments de garniture 18 composent l'ensemble 14 : par exemple, l'ensemble 14 tel que représenté à la figure 1 comprend des lamelles 20 orientées sensiblement circonférentiellement au pneumatique et destinées à former des rainures ménagées à la surface de la bande de roulement, ou des peignes 22 comportant un cordon 24 orienté circonférentiellement et un ensemble d'ailettes 26 orientées de manière axiale par rapport au pneumatique. Les ailettes 26 sont destinées à former des rainures situées en bordure de la bande de roulement du pneumatique, au niveau de l'épaule.

La plupart des éléments de garniture 18 sont reliés les uns aux autres et forment un treillis, comme par exemple les cordons 24 avec les ailettes 26.

On a représenté sur la figure 2 un détail du peigne 22. On constate que les ailettes 26 du peigne 22 comprennent un bord 28 destiné à venir au contact de la surface 16 du bloc 12. Pour cela, la forme du bord 28 des ailettes 26 est courbe et sensiblement complémentaire de celle de la surface 16.

Le cordon 24 est sensiblement orthogonal aux ailettes 26 et s'étend selon une direction circonférentielle du moule. Ainsi, le cordon 24 comprend une base 30 destinée à venir au contact de la surface 16 du bloc 12, la base du cordon comprenant alors une courbure proche de la courbure circonférentielle du pneumatique.

L'ensemble de la base 30 et des bords 28 des ailettes 26 forme une surface 32 de base du peigne 22 destinée à être au contact du bloc support. Cette surface n'est pas plane mais présente une courbure sensiblement identique à celle de la surface 16 du bloc 12.

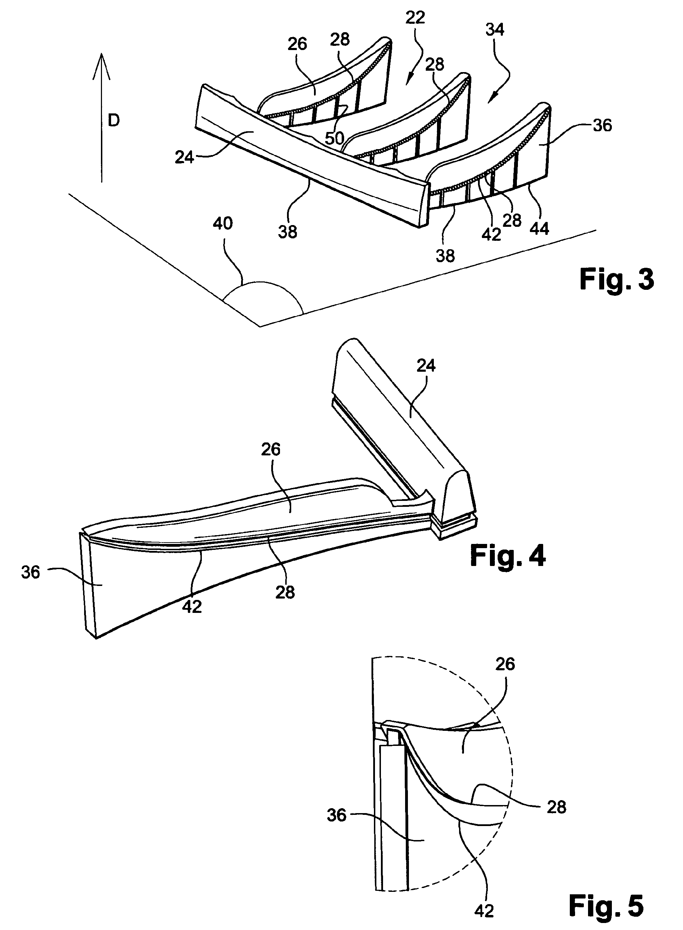

Le peigne 22 formant élément de garniture 18 est fabriqué grâce au procédé de l'invention par frittage laser successif de couches de poudre, en passant par la fabrication d'un élément intermédiaire 34 représenté sur les figure 3, 4 et 5.

L'élément intermédiaire 34 est réalisé d'un seul tenant par frittage laser. Cet élément intermédiaire comprend, d'une part l'élément de garniture 18, en l'espèce le peigne 22, et d'autre part des éléments de soutien 36 agencés de sorte que l'élément intermédiaire 34 comprend une surface de base 38 incluse dans un plan de base imaginaire 40. La surface de base 38 est donc plane et orthogonale à une direction D normale au plan 40.

L'élément intermédiaire 34 est réalisé par fusion sélective de couches de poudre superposées selon la direction D. La surface de base 38 du l'élément 34 est la première couche fusionnée.

Chaque élément de soutien 36 comprend un bord supérieur 42 en contact avec le bord inférieur 28 des ailettes 26 et un bord inférieur opposé 44 appartenant à la surface de base 38 de l'élément intermédiaire 34. Les éléments de soutien 36 présentent une forme de nervure ou de cloison verticale comprises dans un plan normal au plan 40.

Les éléments de soutien 36 sont agencés de sorte qu'une section donnée quelconque de l'élément intermédiaire 34, dans un plan parallèle au plan de base 40, est sensiblement intégralement au droit d'une section quelconque de l'élément intermédiaire située entre la section donnée et le plan de base 40.

Ainsi, aucune partie de l'élément intermédiaire 34 n'est en porte-à-faux selon la direction D contrairement à l'élément de garniture 22. En d'autres termes, tout point de l'élément intermédiaire est soutenu selon la direction D par une partie de l'élément 34 qui transmet les efforts sur la surface de base 38.

Pour faciliter la séparation des éléments de soutien 36 d'avec l'élément de garniture 22, en l'espèce le peigne 22, la jonction entre le bord 28 de l'élément de garniture 22 et le bord supérieur 42 de l'élément de soutien 36 comprend des moyens adaptés pour faciliter cette séparation.

Selon un premier mode de réalisation représenté sur les figures 4 et 5, les moyens de séparation comprennent une diminution d'épaisseur des cloisons 36 au niveau de leur jonction avec l'élément 22. Cette diminution d'épaisseur forme une ligne de brisure de l'élément intermédiaire 34.

Selon un second mode de réalisation représenté sur les figures 2 et 3, la jonction entre le bord 28 de l'élément de garniture 22 et le bord supérieur 42 de l'élément de soutien 36 comprend des perforations contiguës le long d'une ligne de découpe. Ces perforations forment des moyens de pré-découpe. En outre, des lignes de découpes verticales 50 sont également prévues sur les éléments de soutien 36 pour faciliter leur découpe en plusieurs morceaux. Après l'étape de découpe, il peut être nécessaire de poncer le bord 28 de l'élément 22 pour supprimer les irrégularités dues aux préperforations.

L'invention a été décrite en référence à un moule pour pneumatique de type à secteur. Bien entendu, l'invention ne se limite pas aux moules de types à secteurs mais peut être appliquée à un moule de type quelconque comprenant un bloc support sur lequel sont rapportés des éléments de garniture.

En outre, dans l'exemple décrit, les éléments de soutien présentent une forme de cloison ou de nervure. Ces éléments pourraient avoir une forme quelconque, notamment une forme de plot de soutien.

Enfin, dans l'exemple décrit, la totalité de l'élément de garniture est soutenu par des éléments de soutien, mais on reste dans le cadre de l'invention lorsque les éléments de soutien soutiennent localement ou ponctuellement l'élément de garniture, ce qui peut être le cas lorsque l'élément de soutien est un plot de soutien.

## Revendications

1. Procédé de fabrication d'un élément de garniture (18, 22) destiné à être rapporté sur un bloc support (12) d'un moule pour pneumatique, **caractérisé en ce qu'**il comprend les étapes suivantes :
- fabrication, par fusion sélective de couches superposées de poudre, d'un élément intermédiaire (34) comprenant l'élément de garniture (18, 22) et au moins un élément (36) de soutien local de l'élément de garniture (18, 22), l'élément de garniture (18, 22) et l'élément de soutien local (36) étant réalisés d'un seul tenant,
- séparation de l'élément de garniture (18, 22) et de l'élément de soutien (36).

2. Procédé selon la revendication précédente, dans lequel l'élément de soutien (36) est agencé de manière à soutenir l'élément de garniture (18, 22) selon une direction (D) sensiblement parallèle à la direction de superposition des couches de poudre fusionnée.

3. Procédé selon l'une quelconque des revendications précédentes, dans lequel, avant séparation, l'élément de soutien local (36) comprend une extrémité (42) en contact avec l'élément de garniture et une extrémité opposée (44) appartenant à une couche de base des couches de poudre fusionnée.

4. Procédé selon l'une quelconque des revendications précédentes, dans lequel l'élément intermédiaire (34) comprend une surface de base (38) sensiblement plane.

5. Procédé selon l'une quelconque des revendications précédentes, dans lequel chaque couche de poudre fusionnée est située sensiblement intégralement au droit de la couche fusionnée directement inférieure.

6. Procédé selon l'une quelconque des revendications précédentes, dans lequel l'élément intermédiaire (34) comprend des moyens pour faciliter la séparation de l'élément de garniture (18, 22) et de l'élément de soutien (36).

7. Procédé selon la revendication précédente, dans lequel les moyens pour faciliter la séparation comprennent une diminution locale d'épaisseur de l'élément intermédiaire (34), une cloison fine par rapport à l'épaisseur de l'élément intermédiaire (34), ou une pré-découpe de l'élément intermédiaire.

8. Procédé selon l'une quelconque des revendications précédentes, dans lequel l'élément de garniture (18, 22) comprend un réseau de nervures, chaque nervure étant sensiblement normale aux plans définis par les couches superposées.

9. Procédé selon l'une quelconque ces revendications précédentes, comprenant en outre une étape finale de polissage de la surface (28) de l'élément de garniture (18, 22) initialement liée à l'élément de soutien (36).

10. Elément intermédiaire obtenu par mise en oeuvre du procédé selon l'une quelconque des revendications précédentes.

## Claims

1. Method of manufacturing a lining element (18, 22) intended to be attached to a support block (12) of a tyre mould, **characterized in that** it comprises the following steps:
- manufacturing, by selective melting of superposed layers of powder, of an intermediate element (34) comprising the lining element (18, 22) and at least one local support element (36) for locally supporting the lining element (18, 22), the lining element (18, 22) and the local support element (36) being produced as a single piece,
- separating the lining element (18, 22) from the support element (36).

2. Method according to the preceding claim, in which the support element (36) is designed to support the lining element (18, 22) in a direction (D) substantially parallel to the direction of superposition of the layers of melted powder.

3. Method according to either one of the preceding claims, in which, prior to separation, the local support element (36) has one end (42) in contact with the lining element and an opposite end (44) belonging to a base layer of the layers of melted powder.

4. Method according to any one of the preceding claims, in which the intermediate element (34) comprises a substantially planar base surface (38).

5. Method according to any one of the preceding claims, in which each layer of melted powder is practically in its entirety situated in line with the melted layer directly below.

6. Method according to any one of the preceding claims, in which the intermediate element (34) comprises means to make it easier to separate the lining element (18, 22) from the support element (36).

7. Method according to the preceding claim, in which the means for making separation easier comprise a local reduction in thickness of the intermediate element (34), a partition that is thin by comparison with the thickness of the intermediate element (34), or a precut in the intermediate element.

8. Method according to any one of the preceding claims, in which the lining element (18, 22) comprises a network of ribs, each rib being substantially normal to the planes defined by the superposed layers.

9. Method according to any one of the preceding claims, further comprising a final step of polishing the surface (28) of the lining element (18, 22) initially connected to the support element (36).

10. Intermediate element obtained by implementing the method according to any one of the preceding claims.

## Patentansprüche

1. Verfahren zur Herstellung eines Einsatzelements (18, 22), das dazu bestimmt ist, auf einen Trägerblock (12) eines Luftreifen-Formwerkzeugs aufgesetzt zu werden, **dadurch gekennzeichnet, dass** es die folgenden Schritte enthält:
- Herstellung, durch selektives Schmelzen von übereinanderliegenden Pulverschichten, eines Zwischenelements (34), das das Einsatzelement (18, 22) und mindestens ein lokales Stützelement (36) des Einsatzelements (18, 22) enthält, wobei das Einsatzelement (18, 22) und das lokale Stützelement (36) aus einem Stück hergestellt werden,
- Trennung des Einsatzelements (18, 22) und des Stützelements (36).

2. Verfahren nach dem vorhergehenden Anspruch, bei dem das Stützelement (36) so ausgebildet ist, dass es das Einsatzelement (18, 22) in einer Richtung (D) im Wesentlichen parallel zur Richtung des Übereinanderliegens der Schichten von geschmolzenem Pulver stützt.

3. Verfahren nach einem der vorhergehenden Ansprüche, bei dem vor der Trennung das lokale Stützelement (36) ein Ende (42) in Kontakt mit dem Einsatzelement und ein gegenüberliegendes Ende (44) enthält, das zu einer Basisschicht der Schichten von geschmolzenem Pulver gehört.

4. Verfahren nach einem der vorhergehenden Ansprüche, bei dem das Zwischenelement (34) eine im Wesentlichen ebene Basisfläche (38) enthält.

5. Verfahren nach einem der vorhergehenden Ansprüche, bei dem jede geschmolzene Pulverschicht sich im Wesentlichen vollständig im rechten Winkel zu der direkt darunter liegenden geschmolzenen Schicht befindet.

6. Verfahren nach einem der vorhergehenden Ansprüche, bei dem das Zwischenelement (34) Einrichtungen enthält, um die Trennung des Einsatzelements (18, 22) und des Stützelements (36) zu vereinfachen.

7. Verfahren nach dem vorhergehenden Anspruch, bei dem die Einrichtungen zur Vereinfachung der Trennung eine lokale Dickenverringerung des Zwischenelements (34), eine bezüglich der Dicke des Zwischenelements (34) dünne Trennwand, oder einen Vorausschnitt des Zwischenelements enthält.

8. Verfahren nach einem der vorhergehenden Ansprüche, bei dem das Einsatzelement (18, 22) ein Netz von Rippen enthält, wobei jede Rippe im Wesentlichen senkrecht zu den durch die übereinanderliegenden Schichten definierte Ebenen ist.

9. Verfahren nach einem der vorhergehenden Ansprüche, das weiter einen Endschritt des Polierens der Fläche (28) des Einsatzelements (18, 22) enthält, die ursprünglich mit dem Stützelement (36) verbunden war.

10. Zwischenelement, das durch Durchführung des Verfahrens nach einem der vorhergehenden Ansprüche erhalten wurde.
